Europäisches Patentamt

**European Patent Office**

**Office européen des brevets**

(11) Veröffentlichungsnummer: **0 115 589**
**A2**

(12) **EUROPÄISCHE PATENTANMELDUNG**

(21) Anmeldenummer: **83112138.9**

(22) Anmeldetag: **02.12.83**

(51) Int. Cl.³: **C 08 F 2/32**

(30) Priorität: **30.12.82 DE 3248655**

(43) Veröffentlichungstag der Anmeldung: **15.08.84**
**Patentblatt 84/33**

(84) Benannte Vertragsstaaten: **AT BE CH GB LI NL SE**

(71) Anmelder: **Münzing Chemie GmbH, Salzstrasse 174,
D-7100 Heilbronn (DE)**

(72) Erfinder: **Tillmann, Otmar, Dr., Panoramastrasse 18,
D-7113 Neuenstein (DE)**
Erfinder: **Wolf, Siegfried, Jagststrasse 7,
D-7116 Bretzfeld-Waldbach (DE)**

(74) Vertreter: **Hoeger, Stellrecht & Partner,
Uhlandstrasse 14c, D-7000 Stuttgart 1 (DE)**

(54) Verfahren zur Herstellung selbstinvertierender Emulsionspolymerisate.

(57) Die Erfindung bezieht sich auf ein Verfahren zur Herstellung selbstinvertierender Emulsionspolymerisate ethylenisch-ungesättigter, wasserlöslicher Monomerer in stabilen Wasser-in-Öl-Emulsionen. Zur Erzielung der Selbstinvertierbarkeit wird die Polymerisation in Gegenwart dissoziierter anorganischer Salze durchgeführt.

Viskositätsverlauf 1 %iger Lösungen in Wasser bei 20°C

Meßgerät: Contraves Viscometer TV

Kurve 1: Beispiel 1  $(NH_4)_2SO_4$
Kurve 2: Beispiel 2  NaCl
Kurve 3: Beispiel 3  $NH_4H_2PO_4$
Kurve 4: Beispiel 4  ohne anorganische Salze

EP 0 115 589 A2

HOEGER, STELLRECHT & PARTNER
PATENTANWÄLTE
UHLANDSTRASSE 14 c · D 7000 STUTTGART 1

0115589

- 1 -

A 45 457 m
m - 192
22. Dezember 1982

Anmelder: Münzing Chemie GmbH
          Salzstraße 174
          7100 Heilbronn

B e s c h r e i b u n g :

Verfahren zur Herstellung selbstinvertierender
Emulsionspolymerisate

Hochmolekulare Polyelektrolyte, insbesondere die
Homo- und Copolymerisate des Acrylamids in der Form
von Wasser-in-Öl-Emulsionen, werden z. B. als
Retentionsmittel und Entwässerungsbeschleuniger bei
der Papierherstellung, als Flockungsmittel, Sedimentationshilfsmittel und Flotationshilfsmittel bei der
Abwasseraufbereitung, sowie als Zusätze bei der
tertiären Erdölförderung in großen Mengen eingesetzt.

Nach dem bisherigen Stand der Technik (DE-PS
21 54 081) müssen solche Wasser-in-Öl-Emulsionspolymerisate in Anwesenheit hydrophiler Netzmittel
in Wasser gelöst werden, wobei diese hydrophilen
Netzmittel eine Umkehrung (Invertierung) der Wasser-
in-Öl-Emulsion in eine Öl-in-Wasser-Emulsion und
damit eine Freisetzung und Auflösung der Polymerisate
in Wasser bewirken. Diese hydrophilen Netzmittel
müssen entweder den Emulsionspolymerisaten nach
Beendigung der Polymerisation direkt zugesetzt

A 45 457 m
m - 192
22. Dezember 1982

werden, mit dem Nachteil, daß die Stabilität der Emulsionen erheblich beeinträchtigt wird und eine Phasentrennung in den Emulsionen auftritt. Oder man muß diese hydrophilen Netzmittel getrennt dem Verdünnungswasser zusetzen, mit dem Nachteil, daß der Anwender zwei getrennte Produkte verwenden und diese mit Hilfe aufwendiger Einrichtungen genau aufeinander abgestimmt dosieren muß.

Im Hinblick auf eine, für den Anwender problemlose und rationelle Anwendungstechnik werden selbstinvertierende und lagerstabile Emulsionspolymerisate verlangt, welche die vorgenannten Nachteile nicht aufweisen. Aufgabe der Erfindung ist es, ein Verfahren zur Herstellung solcher Emulsionspolymerisate anzugeben.

Die Aufgabe wird erfindungsgemäß in überraschend einfacher und nicht vorhersehbarer Weise dadurch gelöst, daß die Polymerisation der ethylenischungesättigten, wasserlöslichen Monomeren in Form von stabilen Wasser-in-Öl-Emulsionen in bekannter Weise durchgeführt wird, und daß bereits den wässrigen Lösungen der Monomeren wasserlösliche, anorganische Salze zugesetzt werden und diese während der Polymerisation zugegen sind.

A 45 457 m
m - 192
22. Dezember 1982

Nach diesem erfindungsgemäßen Verfahren ergeben sich
feinteilige, fließfähig pumpbare Emulsionspolymerisate, die ohne Phasentrennung über ausreichend lange
Lagerzeiten homogen und stabil bleiben und welche
ohne Zusatz hydrophiler Netzmittel, durch einfaches
Einmischen in Wasser sich selbst in eine Öl-in-Wasser-
Emulsion umkehren (invertieren), wobei die Polymerisate freigesetzt werden und sich im Verdünnungswasser problemlos auflösen.

Die erfindungsgemäße Anwesenheit anorganischer Salze
während der Polymerisation bewirkt als zusätzliche,
erwünschte Nebeneffekte eine bessere Beherrschbarkeit des thermischen Verlaufs der Polymerisation,
sowie eine deutliche Erhöhung der Molekulargewichte,
dokumentiert durch höhere Viskositäten der invertierten wässrigen Lösungen, verbesserte Retentionswirkung und Entwässerungsbeschleunigung bei der
Papierherstellung, sowie verbesserte Flockungseffekte
beim Einsatz in der Abwasseraufbereitung.

Die erfindungsgemäß verwendeten wasserlöslichen,
anorganischen Salze, die als einzelne Salze oder
als Gemische verschiedener Salze eingesetzt werden,
bestehen bevorzugt aus den Kationen $Na^+$ oder $NH_4^+$
und den Anionen $Cl^-$, $NO_3^-$, $HSO_4^-$, $SO_4^{2-}$, $H_2PO_4^-$,
$HPO_4^{2-}$, z. B. Natriumchlorid, Ammoniumsulfat,
Ammoniumdihydrogenphosphat.

A 45 457 m
m - 192
22. Dezember 1982

Als Verfahren zur Herstellung solcher Emulsionspolymerisate wird die nachgenannte Methode bevorzugt:

Eines oder mehrere ethylenisch-ungesättigte, wasserlösliche Monomere werden gemeinsam mit einem oder
mehreren der erfindungsgemäßen anorganischen Salze
(5-3o Gewichtsprozent, bezogen auf die Monomere)
in enthärtetem Wasser gelöst und die so erhaltene
wässrige Lösung in einem unpolaren, organischen
Lösungsmittel in bekannter Weise mit Hilfe eines
geeigneten öllöslichen Wasser-in-Öl-Emulgators,
oder einem Gemisch solcher Emulgatoren, unter
kräftigem Rühren zu einer feinteiligen, stabilen
Wasser-in-Öl-Emulsion emulgiert. An Monomeren
werden verwendet: Acrylamid, Methacrylamid, Acrylsäure, Methacrylsäure, Dimethylaminoethylmethacrylat,
Diethylaminoethylacrylat, Maleinsäure, Maleinsäureamide, Maleinsäureester, allein oder in Kombination,
wobei die Säuren frei und/oder neutralisiert, die
basischen Ester quaterniert und/oder nicht-quaterniert eingesetzt werden. Die so gewonnenen Wasser-
in-Öl-Emulsionen werden in bekannter Weise in einer
Stickstoffatmosphäre mit Hilfe eines Radikale
bildenden Initiators in einem Temperaturbereich
von 2o - 8o $^{o}$ C, bevorzugt im Bereich von 4o - 7o$^{o}$C,
polymerisiert, wobei möglichst hohe Molekulargewichte angestrebt werden.

A 45 457 m
m - 192
22. Dezember 1982

Um eine ausreichende Invertierung der so hergestellten Wasser-in-Öl-Emulsionen zu gewährleisten,
werden die erfindungsgemäß verwendeten anorganischen
Salze bevorzugt in Mengen von 1o - 2o Gewichtsprozent, bezogen auf die Monomeren, eingesetzt.

Als unpolare organische Lösungsmittel verwendet man
vorzugsweise geradkettige oder verzweigte, aliphatische Kohlenwasserstoffe mit einem Siedebereich
von etwa 2oo - 35o$^\circ$ C. (Beispiele: Sinarol II,
Hersteller Shell Chemie oder Spindelöl DR, Hersteller
Texaco).

Als Wasser-in-Öl-Emulgatoren kommen solche öllösliche Emulgatoren in Frage, die geeignet sind,
stabile Wasser-in-Öl-Emulsionen zu bilden, wie z.B.
Sorbitan-Fettsäureester, Glycerin-Fettsäureester,
Alkylpolyglycolether, Fettsäure-Polyglycolester,
allein oder in Kombination, mit einem niedrigen
HLB-Wert, der insgesamt unter 7 liegen sollte. Die
Gesamtmenge der eingesetzten Emulgatoren beträgt
etwa 2 - 1o Gewichtsprozent, vorzugsweise 4 - 6
Gewichtsprozent der Emulsion.

Das Verhältnis der wässrigen Phase zur organischen
Phase kann in weiten Bereichen variieren. Im allgemeinen enthalten diese Wasser-in-Öl-Emulsionen
etwa 3o - 5o % Wasser, 2o - 4o % Kohlenwasserstoffe,
2o - 4o % Polymerisate und 2 - 1o % Emulgatoren.

0115589

A 45 457 m
m - 192
22. Dezember 1982

Die Polymerisation wird in bekannter Weise mit Hilfe
eines freie Radikale bildenden Initiators (Starter)
ausgelöst, der entweder in der wässrigen Phase oder
in der organischen Phase gelöst sein kann. Bevorzugte Starter sind 4,4-Azobis-4-Cyanovaleriansäure,
Azobisisobutyronitril, 2,2-Azobis-(2,4 Dimethylvaleronitril), t-Butylhydroperoxid, Kaliumpersulfat,
Benzoylperoxid sowie Redoxsysteme wie Kaliumpersulfat/
Natriumbisulfit od. dgl.

Nach diesem Herstellungsprinzip werden feinteilige
und lagerstabile Wasser-in-Öl-Emulsionspolymerisate
erhalten, die sich durch Einbringen unter Rühren in
die vorgelegte, berechnete Wassermenge lösen lassen,
wobei sich während des Verdünnungsvorganges die
Wasser-in-Öl-Emulsion selbständig in eine Öl-in-
Wasser-Emulsion umkehrt (invertiert) und die Polymerisate freigesetzt und im Wasser gelöst werden.

Im kontinuierlich arbeitenden Betrieb bedient man
sich für diesen Lösevorgang vorzugsweise eines
einfachen statischen Mischrohres, dem über eine
Dosierpumpe die Wasser-in-Öl-Emulsion und über
einen Durchflußmesser die berechnete Wassermenge
kontinuierlich zugeführt werden. Die aus dem statischen Mischrohr austretende verdünnte Lösung ist
bereits invertiert, besitzt die vorbestimmte Konzentration an gelöstem Polymerisat und entfaltet die
angestrebte Wirksamkeit nach wenigen Minuten Verweilzeit in einem nachgeschalteten Vorratsbehälter.

0115589

A 45 457 m
m - 192
22. Dezember 1982

Die selbständige Umkehrung (Invertierung) der erfindungsgemäß hergestellten Wasser-in-Öl-Emulsionen
wird durch den Viskositätsverlauf nach dem Verdünnen
mit Wasser bewiesen.

Im beigefügten Kurvenbild ist der zeitabhängige
Viskositätsanstieg 1 %-iger wässriger Lösungen der
in den Beispielen 1 bis 4 beschriebenen Emulsionspolymerisate gezeigt. Die erfindungsgemäß in Anwesenheit anorganischer Salze gemäß den Beispielen
1 bis 3 polymerisierten Emulsionen zeigen nach dem
Verdünnen mit Wasser einen ausgeprägten Anstieg der
Viskosität innerhalb weniger Minuten, als Beweis
der selbständigen Umkehrung (Invertierung) in eine
Öl-in-Wasser-Emulsion, wobei sich die Polymeren in
Wasser lösen. Im Vergleich dazu zeigt die gemäß
Beispiel 4 ohne Zusatz anorganischer Salze hergestellte Emulsion nach dem Verdünnen mit Wasser keine
meßbare Veränderung der Viskosität, als Beweis
dafür, daß keine Umkehrung (Invertierung) in eine
Öl-in-Wasser-Emulsion eintritt.

Ein weiterer Beweis für die selbständige Umkehrung
(Invertierung) der erfindungsgemäß hergestellten
Emulsionen ist die Entwässerungsbeschleunigung von
Papierstoffsuspensionen, gemessen mit dem Prüfgerät
nach Schopper-Riegler.

A 45 457 m
m - 192
22. Dezember 1982

Betriebsübliche Zusätze (1 ml Lösung auf 1ooo ml
Papierstoffsuspension) 1 %-iger wässriger Lösungen
der in den Beispielen 1 bis 3 beschriebenen erfindungsgemäßen Emulsionen bewirken eine Entwässerungsbeschleunigung von 5o - 8o %, abhängig von der
Zusammensetzung der Papierstoffsuspension. Ein unter
gleichen Bedingungen durchgeführter Vergleichsversuch mit der nach Beispiel 4 ohne Zusatz anorganischer Salze hergestellten Emulsion ergibt keine
meßbare Beschleunigung der Entwässerungsgeschwindigkeit, da diese Emulsion nicht invertiert und somit
das Polymerisat nicht zur Wirkung kommen kann.

Die Erfindung wird anhand der nachfolgenden Beispiele 1 bis 4 weiter erläutert.

Beispiel 1

Herstellung einer selbstinvertierenden Wasser-in-
Öl-Emulsion eines Copolymerisates aus Acrylamid
und Dimethylaminoethylmethacrylat.

In einem 1 Liter-Dreihalskolben, der mit Rührer,
Thermometer und Einleitungsrohr für Stickstoff ausgestattet ist, werden 24 g Fettsäurediglycerid,
12 g Fettalkoholpolyglycolether und 12 g Fettsäure-
polyglycolester in 23o g Sinarol II gelöst.

0115589

A 45 457 m
m - 192
22. Dezember 1982

Gleichzeitig wird die Monomer-Lösung durch Lösen
von 2o3 g Acrylamid und 35 g Dimethylaminoethylmethacrylat in 343 g enthärtetem Wasser hergestellt.
Anschließend wird durch Zusatz von Schwefelsäure
auf einen pH-Wert von 3,8 - 4,2 eingestellt. In
dieser Monomer-Lösung werden anschließend zusätzlich 4o g Ammoniumsulfat und o,4 g 4,4-Azobis-4-
Cyanovaleriansäure gelöst.

Die so bereitete Monomer-Lösung wird unter Rühren
in der vorgelegten Lösung der Emulgatoren in
Sinarol II zu einer feinteiligen, stabilen Wasser-
in-Öl-Emulsion emulgiert. Zur Entfernung des Luftsauerstoffs wird durch diese Emulsion Stickstoff
geleitet und anschließend auf 5o$^{o}$ C erwärmt. Nach
kurzer Zeit setzt die Polymerisation ein. Man hält
die Temperatur durch Kühlung zwischen 5o und 55$^{o}$ C.
Nach etwa 2 Stunden ist die exotherme Reaktion beendet. Zur Vervollständigung der Polymerisation
wird das Reaktionsgemisch nochmals 1 Stunde bei
7o$^{o}$ C gerührt und anschließend auf 25$^{o}$ C abgekühlt.

Nach dieser Verfahrensweise erhält man eine feinteilige, lagerstabile Wasser-in-Öl-Emulsion, die
durch Einrühren in die berechnete Wassermenge ohne
weitere Zusätze invertiert und gelöst werden kann.

Das Viskositätsverhalten einer 1 %-igen Lösung
dieser Emulsion in Wasser ist aus Kurvenbild Nr. 1
ersichtlich.

A 45 457 m
m - 192
22. Dezember 1982

Beispiel 2

Man wiederholt das Verfahren nach Beispiel 1 mit
dem einzigen Unterschied, daß der wässrigen Monomer-
Lösung anstelle Ammoniumsulfat 4o g Natriumchlorid
zugesetzt werden.

Es ergibt sich eine feinteilige, lagerstabile
Wasser-in-Öl-Emulsion, die durch Einrühren in die
berechnete Wassermenge ohne weitere Zusätze invertiert und gelöst werden kann.

Das Viskositätsverhalten einer 1 %-igen Lösung
dieser Emulsion in Wasser ist aus Kurvenbild Nr. 2
ersichtlich.

Beispiel 3

Man wiederholt das Verfahren nach Beispiel 1 mit
dem einzigen Unterschied, daß der wässrigen Monomer-
Lösung anstelle Ammoniumsulfat 4o g Ammoniumdihydrogenphosphat zugesetzt werden.

Es ergibt sich eine feinteilige, lagerstabile
Wasser-in-Öl-Emulsion, die durch Einrühren in die
berechnete Wassermenge ohne weitere Zusätze invertiert und gelöst werden kann.

A 45 457 m
m - 192
22. Dezember 1982


Das Viskositätsverhalten einer 1 %-igen Lösung
dieser Emulsion in Wasser ist aus Kurvenbild Nr. 3
ersichtlich.

Beispiel 4

Als Vergleich zu den in den Beispielen 1, 2 und 3
beschriebenen, erfindungsgemäß hergestellten Emulsionen wird das Verfahren gemäß Beispiel 1 wiederholt, mit dem Unterschied, daß der wässrigen Monomer-
Lösung kein anorganisches Salz zugesetzt wird.

Es ergibt sich eine Wasser-in-Öl-Emulsion, deren
1 %-ige Lösung in Wasser keine meßbare Veränderung
der Viskosität anzeigt. Siehe hierzu Kurvenbild Nr. 4.

Bei Verwendung von wasserlöslichen, anorganischen
Salzen schwacher Säuren, z. B. $K_2CO_3$ polymerisiert
man erfindungsgemäß vorzugsweise in stark saurem
Milieu z. B. in schwefelsaurer Lösung mit einem
pH-Wert von etwa 3. In diesem Fall erfolgt die Polymerisation dann nicht in Gegenwart von $K_2CO_3$, sondern
von $K_2SO_4$.

A 45 457 m
m - 192
22. Dezember 1982

Anmelder: Münzing Chemie GmbH
Salzstraße 174
7loo Heilbronn

P a t e n t a n s p r ü c h e :

1. Verfahren zur Herstellung selbstinvertierender
   Emulsionspolymerisate ethylenisch-ungesättigter,
   wasserlöslicher Monomerer in stabilen Wasser-in-
   Öl-Emulsionen,
   d a d u r c h   g e k e n n z e i c h n e t ,
   daß die Polymerisation in Gegenwart wasserlöslicher, anorganischer Salze durchgeführt wird.

2. Verfahren nach Anspruch 1, dadurch gekennzeichnet, daß die wasserlöslichen, anorganischen Salze
   überwiegend aus den Kationen $K^+$, $Na^+$ und/oder
   $NH_4^+$ und den Anionen $Cl^-$ und/oder $HSO_4^-$ und/oder
   $SO_4^{2-}$ und/oder $H_2PO_4^-$ und/oder $HPO_4^{2-}$ und/oder
   $NO_3^-$ bestehen.

3. Verfahren nach den Ansprüchen 1 oder 2, dadurch
   gekennzeichnet, daß die wasserlöslichen, anorganischen Salze in Mengen von 5 bis 3o Gewichtsprozent, bezogen auf die Monomeren, während der
   Polymerisation zugegen sind.

0115589

A 45 457 m
m - 192
22. Dezember 1982

4. Verfahren nach den Ansprüchen 1, 2 oder 3, dadurch gekennzeichnet, daß als ethylenisch-ungesättigte, wasserlösliche Monomere Acrylamid,
Methacrylamid, Acrylsäure, Methacrylsäure,
Dimethylaminoethylmethacrylat, Diethylaminoethylacrylat, Maleinsäure, Maleinsäureamide, Maleinsäureester, allein oder in Kombination verwendet
werden, wobei die Säuren frei und/oder neutralisiert, die basischen Ester quaterniert und/oder
nicht-quaterniert eingesetzt werden.

5. Invertierung und Auflösung der nach den Ansprüchen
1 bis 4 hergestellten Emulsionspolymerisate,
dadurch gekennzeichnet, daß man diese in Wasser
einmischt, wobei sich die Invertierung in eine
Öl-in-Wasser-Emulsion und das Auflösen der Polymerisate ohne weitere Zusätze vollzieht.

Viskositätsverlauf 1 %iger Lösungen in Wasser bei 20°C

Meßgerät: Contraves Viscometer TV

Kurve 1: Beispiel 1   $(NH_4)_2SO_4$

Kurve 2: Beispiel 2   NaCl

Kurve 3: Beispiel 3   $NH_4H_2PO_4$

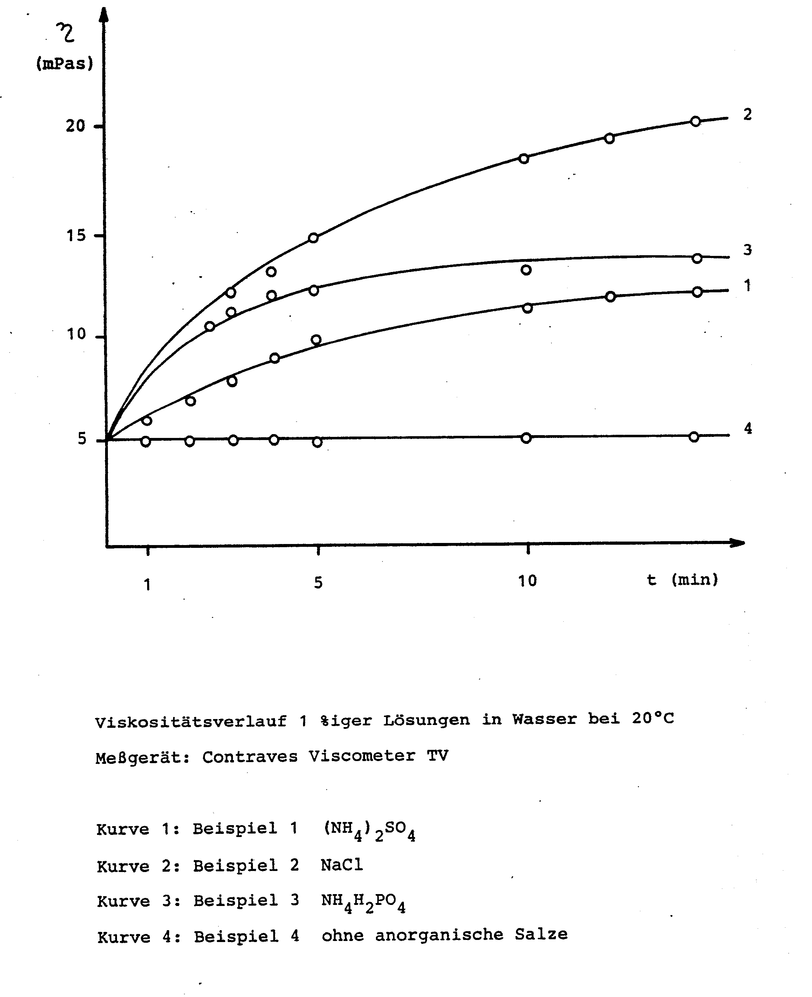

Kurve 4: Beispiel 4   ohne anorganische Salze

*Münzing Chemie GmbH , Salzstrasse 174 , 7100 Heilbronn*